# FASCICULE DE BREVET EUROPEEN

(11) **EP 3 491 689 B1**
(45) Date de publication et mention de la délivrance du brevet: **06.04.2022**
(21) Numéro de dépôt: 17754409.5
(22) Date de dépôt: 21.07.2017
(51) Int. Cl.: H01M 4/04, H01M 4/133, H01M 4/1393, H01M 4/62

(54) **ANODE POUR CELLULE DE BATTERIE LITHIUM-ION, SON PROCEDE DE FABRICATION ET LA BATTERIE L'INCORPORANT**
ANODE FÜR EINE LITHIUM-IONEN-BATTERIEZELLE, HERSTELLUNGSVERFAHREN DAFÜR UND BATTERIE DAMIT
ANODE FOR A LITHIUM-ION BATTERY CELL, PRODUCTION METHOD THEREOF AND BATTERY INCLUDING SAME

(30) Priorité: 26.07.2016 FR 1657155
(43) Date de publication de la demande: 05.06.2019
(73) Titulaire: Hutchinson, 75008 Paris (FR)
(72) Inventeur: SONNTAG, Philippe, 77210 AVON (FR); COURTAT, Julie, 45700 PANNES (FR); ZIMMERMANN, Marc, 67204 ACHENHEIM (FR); ASTAFYEVA, Ksenia, 45200 MONTARGIS (FR); DUFOUR, Bruno, 77430 CHAMPAGNE SUR SEINE (FR); AYME-PERROT, David, 68330 HUNINGUE (FR)
(74) Mandataire: Plasseraud IP
(86) Numéro de dépôt international: PCT/FR2017/052031
(87) Numéro de publication internationale: WO 2018/020117

(56) Documents cités:
- EP-A1- 2 639 860
- WO-A1-2015/064099
- WO-A1-2015/124835
- FR-A1- 2 766 969

## Description

La présente invention concerne une composition polymérique pour électrode apte à former une anode de batterie lithium-ion, un procédé de préparation de cette composition, une telle électrode et une batterie lithium-ion dont la ou chaque cellule incorpore cette électrode.

Il existe deux sortes principales de batteries d'accumulateurs au lithium : les batteries lithium métal, où l'électrode négative est composée de lithium métallique (matériau qui pose des problèmes de sécurité en présence d'un électrolyte liquide), et les batteries lithium-ion, où le lithium reste à l'état ionique.

Les batteries lithium-ion sont constituées d'au moins deux électrodes faradiques conductrices de polarités différentes, l'électrode négative ou anode et l'électrode positive ou cathode, électrodes entre lesquelles se trouve un séparateur qui est constitué d'un isolant électrique imbibé d'un électrolyte aprotique à base de cations Li⁺ assurant la conductivité ionique. Les électrolytes utilisés dans ces batteries lithium-ion sont usuellement constitués d'un sel de lithium par exemple de formule LiPF₆, LiAsF₆, LiCF₃SO₃ ou LiClO₄ qui est dissous dans un mélange de solvants non aqueux tels que l'acétonitrile, le tétrahydrofuranne ou le plus souvent un carbonate par exemple d'éthylène ou de propylène.

Une batterie lithium-ion est basée sur l'échange réversible de l'ion lithium entre l'anode et la cathode lors de la charge et la décharge de la batterie, et elle possède une haute densité d'énergie pour une masse très faible grâce aux propriétés physiques du lithium.

La matière active de l'anode d'une batterie lithium-ion est conçue pour être le siège d'une insertion/désinsertion réversible de lithium et est typiquement constituée de graphite (capacité de 370 mAh/g et potentiel redox de 0,05V par rapport au couple Li⁺/Li) ou en variante d'oxydes métalliques mixtes parmi lesquels on recense les oxydes de titane lithiés de formule Li₄Ti₅O₁₂, par exemple. Quant à la matière active de la cathode, elle est usuellement constituée d'un oxyde d'un métal de transition ou d'un phosphate de fer lithié. Ces matières actives permettent ainsi une insertion/désinsertion réversible de lithium dans les électrodes, et plus leurs fractions massiques y sont élevées, plus la capacité des électrodes est grande.

Ces électrodes doivent également contenir un composé conducteur électrique, tel que du noir de carbone et, pour leur conférer une cohésion mécanique suffisante, un liant polymérique.

Les anodes de batteries lithium-ion sont le plus souvent fabriquées par un procédé comprenant successivement une étape de dissolution ou de dispersion des ingrédients de l'anode dans un solvant, une étape d'étalement de la solution ou dispersion obtenue sur un collecteur métallique de courant, puis enfin une étape d'évaporation du solvant. Les procédés utilisant un solvant organique (comme celui présenté dans le document US-A1-2010/0112441) présentent des inconvénients dans les domaines de l'environnement et de la sécurité, en particulier du fait qu'il est nécessaire d'évaporer des quantités élevées de ces solvants qui sont toxiques ou inflammables. Quant aux procédés utilisant un solvant aqueux, leur inconvénient majeur est que l'anode doit être séchée de manière très poussée avant de pouvoir être utilisée, les traces d'eau limitant la durée de vie utile des batteries au lithium. On peut par exemple citer le document EP-B1-1 489 673 pour la description d'un procédé de fabrication d'une anode à base de graphite, d'un liant élastomère et utilisant un solvant aqueux.

On a donc cherché par le passé à fabriquer des anodes pour batteries lithium-ion sans utilisation de solvants, notamment par des techniques de mise en oeuvre par voie fondue (par exemple par extrusion). Malheureusement, ces procédés par voie fondue génèrent des difficultés majeures dans le cas de ces batteries qui requièrent une fraction massique de matière active dans le mélange polymérique de l'anode d'au moins 85 % pour que celle-ci présente une capacité suffisante au sein de la batterie. Or, à de tels taux de matière active, la viscosité du mélange devient très élevée et entraîne des risques de sur-échauffement du mélange et de perte de cohésion mécanique après sa mise en oeuvre. Le document US-A-5 749 927 présente un procédé de préparation en continu par extrusion d'électrodes de batteries lithium-polymère, qui comprend un mélangeage de la matière active d'électrode avec un conducteur électrique et une composition d'électrolyte solide comprenant un polymère, un sel de lithium et un mélange carbonate de propylène / carbonate d'éthylène en large excès par rapport à ce polymère. Dans ce document, la fraction massique de matière active présente dans la composition polymérique d'anode obtenue est inférieure à 70 %, étant nettement insuffisante pour une batterie lithium-ion.

Le document EP-A1-2 639 860 au nom de la Demanderesse propose une composition d'anode pour batterie lithium-ion préparée par voie fondue et sans évaporation de solvant, qui permet d'augmenter la fraction massique de matière active dans l'anode en conférant ainsi une haute performance à la batterie lithium-ion l'incorporant. Les compositions d'anode présentées dans ce document comprennent :
- une matière active (e.g. un graphite) selon une fraction massique supérieure à 85 %,
- une charge électriquement conductrice,
- un liant élastomère réticulé constitué par exemple d'un copolymère acrylonitrile-butadiène hydrogéné (HNBR) « THERBAN 4307 » complètement saturé (i.e. défini par un taux résiduel de doubles liaisons au maximum égal à 0,9 %) et présentant un taux massique d'unités issues de l'acrylonitrile égal à 43 %,
- un système de réticulation radicalaire du liant élastomère comprenant un peroxyde, et
- un composé organique non volatil (e.g. carbonate d'alcène) qui est utilisable dans le solvant d'électrolyte de la batterie.

Le document WO-A2-2015/124835 également au nom de la Demanderesse présente une composition d'électrode (e.g. d'anode) pour batterie lithium-ion préparée par voie fondue et sans évaporation de solvant, à l'aide d'une phase polymérique sacrificielle que l'on mélange à une matière active, un liant élastomère réticulé ou non et une charge conductrice, puis que l'on élimine au moins partiellement par exemple par décomposition thermique, ce qui permet d'obtenir une plastification et une fluidité améliorées lors de la mise en oeuvre du mélange fondu en dépit d'une fraction massique de matière active utilisable dans la composition supérieure à 80 %, et une porosité contrôlée de cette dernière lui conférant une capacité d'électrode satisfaisante. Cette composition peut comprendre à titre de liant un HNBR (e.g. le Zetpol^{®} 2010L, qui est un HNBR partiellement saturé présentant un taux massique d'unités issues de l'acrylonitrile de 36 %, un degré d'hydrogénation de 96 % et une valeur d'iode de 11 %, mesurée selon la norme ASTM D5902-05).

Les compositions d'anode présentées dans ces deux derniers documents sont globalement satisfaisantes pour une batterie lithium-ion, cependant la Demanderesse a cherché au cours de ses recherches récentes à améliorer encore leurs propriétés électrochimiques.

Un but de la présente invention est donc de proposer une nouvelle composition polymérique d'anode contenant une matière active qui comprend un graphite utilisable dans une anode de batterie lithium-ion selon une fraction massique très élevée tout en étant apte à conférer à l'anode une capacité et une cyclabilité améliorées, et ce but est atteint en ce que la Demanderesse vient de découvrir d'une manière surprenante que si l'on mélange à cette matière active et à une charge électriquement conductrice un liant élastomère qui comprend au moins un copolymère acrylonitrile-butadiène non hydrogéné (NBR) et/ou au moins un HNBR présentant chacun un taux massique d'unités issues de l'acrylonitrile (taux massique d'ACN en abrégé) égal ou supérieur à 40 % et réticulé(s) par oxydation thermique, sous une atmosphère comprenant de l'oxygène selon une pression partielle d'oxygène supérieure à 10⁴ Pa (0,1 bar) et à une température comprise entre 200° C et 300° C, alors on peut obtenir tant par voie liquide que fondue une anode présentant des capacités à cinq et à dix cycles nettement supérieures à 200 mAh/g d'anode, avec un taux de rétention après cinq ou dix cycles par rapport au premier cycle qui est nettement supérieur à 80 % (voire supérieur à 90 % et même à 100 %).

En effet, la Demanderesse a découvert que l'oxygène utilisé pour cette oxydation thermique interagit à haute température avec les groupements nitriles -C ≡ N du ou de chaque copolymère (groupements beaucoup plus nombreux que les doubles liaisons des unités issues du butadiène, compte tenu du taux massique d'ACN très élevé) pour partiellement oxyder/ déshydrater ces groupements nitriles en les enrichissant en atomes d'oxygène et en les appauvrissant en atomes d'hydrogène, ce qui permet de former des ponts carbonés entre les chaînes polymériques du ou de chaque copolymère et donc de le réticuler.

Ainsi, une composition polymérique pour électrode apte à former une anode de batterie lithium-ion selon l'invention, la composition comprenant une matière active qui comprend un graphite apte à réaliser une insertion/ désinsertion réversible de lithium en ladite anode, une charge électriquement conductrice et un liant élastomère réticulé qui comprend au moins un copolymère acrylonitrile-butadiène non hydrogéné (NBR) et/ou au moins un copolymère acrylonitrile-butadiène hydrogéné (HNBR), qui présente(nt) chacun un taux massique d'ACN égal ou supérieur à 40 % et qui est(sont) réticulé(s) par oxydation thermique.

Par « liant comprenant au moins un NBR et/ou au moins un HNBR », on entend ici que ledit liant peut comprendre un ou plusieurs NBR et/ou un ou plusieurs HNBR, chacun satisfaisant à la double condition de présenter ce taux massique très élevé d'ACN et d'être réticulé - exclusivement ou au moins en partie - par une réaction chimique de thermo-oxydation en présence des atomes d'oxygène de l'atmosphère thermo-oxydante interagissant avec les groupements nitriles.

D'une manière générale, les élastomères réticulés NBR et/ou HNBR que comprend une composition selon l'invention peuvent être des élastomères fonctionnalisés ou non, étant entendu qu'il est possible de fonctionnaliser ces NBR et/ou HNBR par des groupes fonctionnels appropriés pour conférer des propriétés améliorées (e.g. d'adhésion) à la composition d'électrode selon l'invention, comme par exemple des groupes carbonyle (e.g. carboxyle, pour l'obtention de NBR carboxylés, également appelés XNBR), à titre non limitatif.

On notera que cette réticulation par oxydation thermique se distingue de la réticulation radicalaire au peroxyde notamment utilisée dans le document EP-A1-2 639 860 pour réticuler le liant HNBR, et que cette réticulation spécifique se traduit structurellement pour la composition de l'invention par le fait qu'elle peut être avantageusement dépourvue de tout système de réticulation, tel qu'un système de réticulation radicalaire par exemple au peroxyde, étant donné que les sites actifs pour la réticulation par thermo-oxydation sont apportés par l'oxygène de l'atmosphère environnante interagissant spécifiquement avec les groupements nitriles du NBR et/ou du HNBR.

Comme indiqué ci-dessus, on notera en variante de cette réticulation exclusive dudit au moins un NBR et/ou dudit au moins un HNBR par oxydation thermique, qu'il est également possible de le(s) réticuler en partie par voie radicalaire (e.g. en incorporant un système de réticulation au peroxyde dans la composition) en plus de la réticulation procurée par ladite oxydation thermique.

Avantageusement, ledit liant réticulé comprend ainsi le produit d'une réaction chimique d'oxydation thermique, sous une atmosphère comprenant de l'oxygène selon une pression partielle d'oxygène supérieure à 10⁴ Pa et à une température comprise entre 200° C et 300° C, dudit au moins un NBR et/ou dudit au moins un HNBR à l'état non réticulé(s), de ladite matière active et de ladite charge électriquement conductrice avec l'oxygène de ladite atmosphère.

On notera que l'oxydation thermique selon l'invention modifie la composition initiale non réticulée (ou réticulable dans l'absolu, si la composition incorpore un système de réticulation), pour l'obtention d'une composition finale réticulée par réaction chimique avec l'oxygène dudit au moins un NBR et/ou dudit au moins un HNBR non réticulé(s) ou réticulable(s).

Comme expliqué ci-dessus, lesdites unités issues de l'acrylonitrile que comporte ledit au moins un NBR et/ou ledit au moins un HNBR réticulé(s) dans la composition réticulée selon l'invention sont au moins partiellement enrichies en atomes d'oxygène et appauvries en atomes d'hydrogène, par ladite oxydation thermique.

De préférence, ledit taux massique d'ACN dans ledit au moins un NBR et/ou ledit au moins un HNBR est égal ou supérieur à 44 %, et encore plus préférentiellement égal ou supérieur à 48 %.

Egalement à titre préférentiel, ledit liant réticulé comprend selon une fraction massique inclusivement comprise entre 70 % et 100 % ledit au moins un NBR et/ou ledit au moins un HNBR, ledit liant réticulé étant présent dans la composition selon une fraction massique inférieure à 5 %, de préférence inférieure ou égale à 4 %.

Selon un exemple de réalisation de l'invention, ledit liant réticulé comprend au moins un HNBR qui présente :
- une valeur d'iode, mesurée selon la norme ASTM D5902-05, supérieure à 10 %, avantageusement supérieure à 15 % et encore plus avantageusement supérieure à 20 %, et
- un degré d'hydrogénation inférieur à 95 % et avantageusement inférieur à 92 % (mesuré par spectroscopie infrarouge).

On notera que cette valeur d'iode (également appelée nombre d'iode et représentant par définition des cg d'iode par g de HNBR) mesurée selon cette norme (ré-approuvée en 2010 et en 2015), indique un taux d'insaturations résiduelles pouvant être relativement élevé pour le HNBR selon l'invention, qui témoigne du fait que ce HNBR est partiellement hydrogéné et est donc de grade partiellement saturé (contrairement au HNBR « THERBAN 4307 » précité du document EP-A1-2 639 860).

On notera toutefois que le HNBR selon l'invention peut être en variante de grade complètement saturé et hydrogéné, i.e. présentant une valeur d'iode inférieure à 10 % et un degré d'hydrogénation proche de 100 %.

Avantageusement, ledit liant réticulé peut comprendre un mélange dudit au moins un NBR et dudit au moins un HNBR (qui présentent chacun ledit taux massique d'ACN égal ou supérieur à 40 % et qui sont tous deux réticulés par ladite oxydation thermique, comme expliqué ci-dessus).

On notera que la répartition homogène dans la composition dudit liant élastomère réticulé permet d'assurer la tenue mécanique de l'électrode.

Selon une autre caractéristique de l'invention, la composition selon l'invention peut avantageusement comprendre :
- selon une fraction massique supérieure à 90 %, ladite matière active comprenant ledit graphite qui est de type artificiel ou naturel, e.g. le graphite artificiel C-NERGY^{®} L-SERIES (Timcal) ou de l'une des séries PGPT100, PGPT200, PGPT20 (Targray), et
- selon une fraction massique comprise entre 1 % et 6 %, ladite charge électriquement conductrice choisie dans le groupe constitué par les noirs de carbone, les graphites, les graphites expansés, les fibres de carbones, les nanotubes de carbone, les graphènes et leurs mélanges, de préférence choisi parmi les graphites expansés purifiés conducteurs, les noirs de carbone de haute pureté et les nanofibres de carbone.

On notera que cette fraction massique très élevée de ladite matière active dans la composition d'électrode permet de conférer une performance élevée à la batterie lithium-ion l'incorporant.

Avantageusement, ladite composition de l'invention peut être dépourvue de tout composé organique non volatil (i.e. présentant un point d'ébullition supérieur à 150° C à la pression atmosphérique de 1,013 10⁵ Pa), tel qu'un carbonate d'alcène, contrairement à l'enseignement du document EP-A1-2 639 860 précité.

Une électrode selon l'invention est apte à former une anode de batterie lithium-ion, et est caractérisée en ce que l'électrode comprend au moins un film constitué de ladite composition polymérique définie ci-dessus, et un collecteur métallique de courant en contact avec ledit au moins un film.

Une batterie lithium-ion selon l'invention comprend au moins une cellule comportant une anode, une cathode et un électrolyte à base d'un sel de lithium et d'un solvant non aqueux, et cette batterie est caractérisée en ce que ladite anode est constituée de cette électrode de l'invention.

Avantageusement, la cathode de cette batterie peut être à base d'une matière active comprenant au moins un composé ou complexe polyanionique lithié ayant une tension de fonctionnement inférieure à 4 V et de préférence revêtu de carbone, tel qu'un phosphate d'un métal M lithié de formule LiMPO₄ où M est par exemple un atome de fer.

Un procédé de préparation selon l'invention de ladite composition polymérique définie ci-dessus, comprend successivement :
a) un mélangeage d'ingrédients de la composition comprenant ladite matière active, ledit liant élastomère à l'état non réticulé et ladite charge électriquement conductrice, pour l'obtention d'un mélange précurseur de ladite composition,
b) un dépôt dudit mélange sur un collecteur métallique de courant pour que ledit mélange forme un film non réticulé, puis
c) une oxydation thermique dudit film non réticulé sous une atmosphère comprenant de l'oxygène selon une pression partielle d'oxygène supérieure à 10⁴ Pa et à une température comprise entre 200° C et 300° C, pour obtenir ladite électrode dans laquelle ledit liant est réticulé.

Selon un premier mode de réalisation de l'invention, l'on met en œuvre :
- l'étape a) par broyage par voie liquide desdits ingrédients dissous ou dispersés dans un solvant,
- l'étape b) par une enduction à l'aide d'une racle, et
- l'étape c), après évaporation dudit solvant consécutive à l'étape b), par un recuit dudit film à température comprise entre 200 et 300° C.

Selon un second mode de réalisation de l'invention, l'on met en œuvre :
- l'étape a) par mélangeage desdits ingrédients par voie fondue et sans évaporation de solvant, lesdits ingrédients comprenant en outre une phase polymérique sacrificielle selon une fraction massique dans ledit mélange égale ou supérieure à 28 %,
- l'étape b) par un calandrage, et
- l'étape c) par décomposition, à ladite température comprise entre 200 et 300° C, de ladite phase polymérique sacrificielle présentant une température de décomposition thermique inférieure d'au moins 20° C à celle dudit liant, pour éliminer au moins partiellement ladite phase polymérique sacrificielle.

Avantageusement ladite phase polymérique sacrificielle peut comprendre au moins un polymère sacrificiel choisi parmi les polyalcènes carbonates et peut être présente dans ledit mélange selon une fraction massique comprise entre 30 % et 50 %, et l'étape a) peut être mise en oeuvre dans un mélangeur interne ou une extrudeuse sans macroséparation de phases entre ledit liant et ladite phase polymérique sacrificielle dans ledit mélange, dans lequel ledit liant est dispersé de manière homogène dans ladite phase polymérique sacrificielle qui est continue ou bien forme une phase co-continue avec cette dernière.

On pourra avantageusement se référer à l'enseignement du document WO-A1-2015/124835 précité pour la mise en oeuvre de ce second mode de réalisation de l'invention, étant précisé que le procédé selon ce second mode permet de contrôler la porosité au sein de la composition par la quantité de phase sacrificielle introduite en la maîtrisant en termes de taille, de quantité et de morphologie des pores, et procure des temps de mise en oeuvre courts, typiques des procédés de plasturgie conventionnels tels que l'extrusion par exemple.

D'une manière générale, il est possible d'ajouter aux compositions de l'invention des additifs spécifiques afin d'améliorer ou d'optimiser leur procédé de fabrication. On peut également ajouter des composés permettant la réticulation du liant ainsi que des coagents capables d'aider à la réticulation et à l'homogénéisation de celle-ci. On peut par exemple citer les peroxydes organiques à titre d'agent de réticulation et le triallyl cyanurate comme coagent. La réticulation permet d'assurer la cohésion de la composition en fonction de la nature du liant. On notera que l'utilisation d'un agent et d'un coagent de réticulation est utile mais pas nécessaire à l'invention.

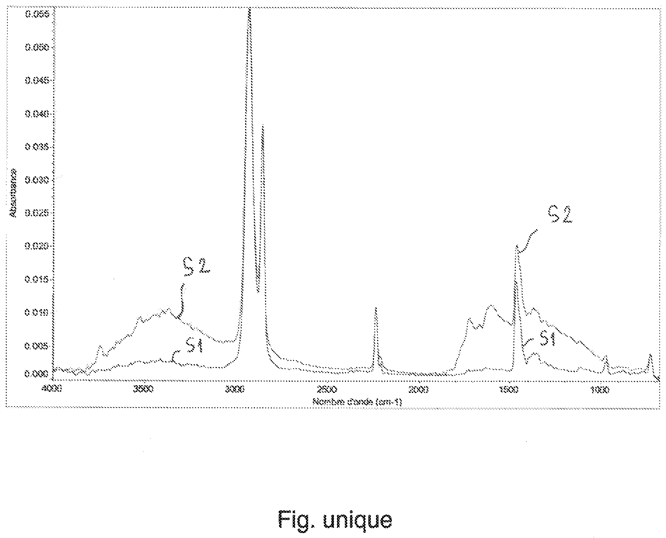

D'autres caractéristiques, avantages et détails de la présente invention ressortiront à la lecture de la description suivante de plusieurs exemples de réalisation de l'invention, donnés à titre illustratif et non limitatif en relation avec le dessin joint, dans lequel :
La figure unique est un graphique illustrant les spectres d'absorbance mesurés par spectroscopie infrarouge à transformée de Fourier (IRTF en abrégé) montrant l'évolution de l'absorbance en fonction du nombre d'onde de deux films élastomères qui sont constitués d'un liant HNBR dont l'un est un film « témoin » non réticulé et l'autre réticulé selon l'invention via une oxydation thermique.

### Exemples « témoin », non conforme à l'invention et selon l'invention d'anodes pour batterie lithium-ion préparées par voie liquide:

Dans l'ensemble des exemples suivants, on a utilisé :
- à titre de matière active, un graphite artificiel de dénomination C-NERGY^{®} L-SERIES (Timcal) ;
- à titre de charge conductrice, un graphite expansé purifié conducteur ;
- à titre de solvant, la N-méthylpyrrolidinone, d'Aldrich (NMP) ;
- les deux liants NBR suivants de Versalis ENI :
   * Europrene N 3360 à taux massique d'ACN de 33 %, et
   * Europrene N 4560 à taux massique d'ACN de 45 % ;
- les trois liants HNBR suivants de Zeon Chemicals L. P. :
   * Zetpol^{®} 4310, à taux massique d'ACN de 19 %, valeur d'iode de 15 et degré d'hydrogénation (HYD) de 95 %,
   * Zetpol^{®} 2010L à taux massique d'ACN de 36 %, valeur d'iode de 11 et degré d'hydrogénation (HYD) de 96 %,
   * Zetpol^{®} 0020 à taux massique d'ACN de 50 %, valeur d'iode de 23 et degré d'hydrogénation (HYD) de 91 %.

### Protocole de mise en oeuvre des anodes par voie liquide :

On a fabriqué des anodes de batterie Li-ion par mélangeage de ces ingrédients dans un broyeur à billes, puis enduction de la dispersion obtenue après mélangeage sur un feuillard métallique formant un collecteur de courant, séchage ultérieur et enfin réticulation optionnelle des anodes obtenues selon l'invention via un recuit.

On a d'abord mélangé la matière active, la charge conductrice et le liant (dissous dans la NMP avec un ratio massique 1/10) dans la NMP par broyage dans un broyeur à billes pendant 3 minutes à 350 tours/minute.

On a ensuite enduit les dispersions obtenues sur un feuillard de cuivre nu d'épaisseur de 12 µm, à l'aide d'une racle d'ouverture de 150 µm. Après évaporation du solvant à 60° C pendant 2 heures, on a recuit les films enduits à 240° C pendant 30 minutes pour l'anode selon l'invention (une anode non conforme à l'invention a été obtenue sans ce recuit final). On a obtenu une épaisseur finale d'anodes allant de 50 µm à 100 µm.

Le tableau 1 ci-après détaille les formulations des compositions utilisées dans les dispersions initiales et dans les anodes finalement obtenues (fractions massiques en %).

**Tableau 1:**

| | Dispersion initiale | Anode finale |
|---|---|---|
| **Exemple témoin** | C1 | |
| Matière active : Graphite | 38.3 | 95.9 |
| Charge conductrice : Graphite expansé | 0.4 | 1.0 |
| Liant : HNBR (Zetpol^{®} 2010L) | 1.2 | 3.1 |
| NMP | 60.1 | 0 |
| Dicumyl peroxyde (% par rapport au liant) | 3.0 | |
| TAC 70 sur silice (% par rapport au liant) | 3.0 | |

| **Exemple témoin** | **C2** | |
|---|---|---|
| Matière active : Graphite | 38.0 | 94.0 |
| Charge conductrice : Graphite expansé | 1.2 | 3.0 |
| Liant : HNBR (Zetpol^{®} 4310) | 1.2 | 3.0 |
| NMP | 59.6 | 0 |

| **Exemple selon l'invention** | **I1 (avec recuit final à 240° C)** | |
|---|---|---|
| **Exemple non conforme à l'invention** | **C3 (sans recuit final)** | |
| Matière active : Graphite | 38.0 | 94.0 |
| Charge conductrice : Graphite expansé | 1.2 | 3.0 |
| Liant : HNBR (Zetpol^{®} 0020) | 1.2 | 3.0 |
| NMP | 59.6 | 0 |

| **Exemple témoin** | **C4** | |
|---|---|---|
| Matière active : Graphite | 32.9 | 90.0 |
| Charge conductrice : Graphite expansé | 2.6 | 7.0 |
| Liant : HNBR (Zetpol^{®} 2010L) | 1.1 | 3.0 |
| NMP | 63.4 | 0 |
| Dicumyl peroxyde (% par rapport au liant) | 9.0 | |
| TAC 70 sur silice (% par rapport au liant) | 8.2 | |

| **Exemple témoin** | **C5** | |
|---|---|---|
| Matière active : Graphite | 38.0 | 94.05 |
| Charge conductrice : Graphite expansé | 1.2 | 2.95 |
| Liant : HNBR (Zetpol^{®} 2010L) | 1.2 | 3.0 |
| NMP | 59.6 | 0 |

| **Exemple témoin** | **C6** | |
|---|---|---|
| Matière active : Graphite | 38 | 94 |
| Charge conductrice : Graphite expansé | 1.2 | 3 |
| Liant : NBR (Europrene N 3360) | 1.2 | 3 |
| NMP | 59.6 | 0 |

| **Exemple non conforme à l'invention** | **C7** | |
|---|---|---|
| Matière active : Graphite | 38 | 94 |
| Charge conductrice : Graphite expansé | 1.2 | 3 |
| Liant : NBR (Europrene N 4560) | 1.2 | 3 |
| NMP | 59.6 | 0 |

| **Exemple non conforme à l'invention** | **C8** | |
|---|---|---|
| Matière active : Graphite | 38 | 94 |
| Charge conductrice : Graphite expansé | 1.2 | 3 |
| Liant : NBR (Europrene N 4560) | 1.2 | 3 |
| NMP | 59.6 | 0 |
| Dicumyl peroxyde (% par rapport au liant total) | 9.0 | |

| **Exemple selon l'invention** | **I2 (avec recuit final à 240° C)** | |
|---|---|---|
| **Exemple non conforme à l'invention** | **C9 (sans recuit final)** | |
| Matière active : Graphite | 38 | 94 |
| Charge conductrice : Graphite expansé | 1.2 | 3 |
| Liant : HNBR (Zetpol^{®} 0020) | 0.6 | 1.5 |
| Liant : NBR (Europrene N 4560) | 0.6 | 1.5 |
| NMP | 59.6 | 0 |
| Dicumyl peroxyde (% par rapport au liant total) | 9.0 | |

On notera que :
- L'anode C1 témoin comprend un liant HNBR non conforme à l'invention et a été réticulée exclusivement par un recuit final (oxydation thermique à 240° C),
- L'anode C2 témoin comprend un autre liant HNBR non conforme à l'invention et a été réticulée exclusivement par un recuit final (oxydation thermique à 240° C),
- l'anode C3 non conforme à l'invention a été préparée avec la même formulation que l'anode I1 selon l'invention, bien qu'elle diffère de cette dernière par l'absence de réticulation finale par recuit. En d'autres termes, I1 comprend comme C3 un HNBR selon l'invention, mais seule I1 a été réticulée (exclusivement par oxydation thermique à 240° C),
- L'anode C4 témoin comprend un liant HNBR non conforme à l'invention et a été réticulée à la fois par voie radicalaire et par oxydation thermique à 240° C,
- L'anode C5 témoin comprend ce même liant HNBR non conforme à l'invention et a été réticulée exclusivement par oxydation thermique à 240° C,
- L'anode C6 témoin comprend un liant NBR non conforme à l'invention et n'a pas été réticulée,
- L'anode C7 non conforme à l'invention comprend un liant NBR selon l'invention et n'a pas été réticulée,
- L'anode C8 non conforme à l'invention comprend ce même liant NBR selon l'invention et a été réticulée exclusivement par voie radicalaire, et
- l'anode C9 non conforme à l'invention a été préparée avec la même formulation que l'anode I2 selon l'invention, bien qu'elle diffère de cette dernière par l'absence de réticulation finale par recuit.

Plus précisément, I2 comprend comme C9 un mélange de liants selon l'invention NBR + HNBR chacun selon l'invention, mais seule I2 a été réticulée en partie par oxydation thermique à 240° C (et en outre par voie radicalaire) puisque C9 a été réticulée exclusivement par voie radicalaire.

### Exemples « témoin » et selon l'invention d'anodes pour batterie lithium-ion préparées par voie fondue :

Dans l'ensemble des exemples suivants, on a utilisé :
- à titre de matière active, le graphite artificiel précité de dénomination C-NERGY^{®} L-SERIES (Timcal),
- à titre de charge conductrice, le graphite expansé purifié conducteur précité, et
- à titre de phase polymérique sacrificielle, un coupage des deux polymères sacrificiels (polypropylène carbonates, PPC en abrégé) Converge^{®} Polyol 212-10 de Novomer et QPAC^{®} 40 d'Empower Materials.

Dans les exemples « témoin », on a utilisé le liant HNBR Zetpol^{®} 2010L précité (taux d'acrylonitrile de 36 %, nombre d'iode de 11).

Dans les exemples selon l'invention, on a utilisé le liant HNBR Zetpol^{®} 0020 précité (taux d'acrylonitrile de 50 %, nombre d'iode de 23).

### Protocole de mise en oeuvre des anodes par voie fondue:

On a mis en oeuvre par voie fondue les anodes à base dudit graphite au moyen d'un mélangeur interne de type Haake Polylab OS, d'une capacité de 69 cm³ et à une température comprise entre 60° C et 75° C.

On a calandré les mélanges ainsi obtenus à température ambiante à l'aide d'un mélangeur externe à cylindres Scamex jusqu'à atteindre une épaisseur d'anode de 200 µm, puis on les a encore calandrés à 50° C pour atteindre une épaisseur de 50 µm. On a déposé les films obtenus sur un collecteur de cuivre à l'aide d'une calandre à feuille à 70° C.

On a placé les anodes obtenues en étuve afin d'en extraire la phase sacrificielle (PPC solide et liquide). On leur a fait subir une rampe en température de 50° C à 250° C puis une isotherme de 30 min. à 250° C.

Le tableau 2 ci-après détaille les formulations des compositions utilisées avant et après extraction de la phase sacrificielle (fractions massiques en %).

**Tableau 2:**

| **Exemple témoin** | **C'1** | |
|---|---|---|
| | Avant extraction | Après extraction |
| Liant : HNBR (Zetpol^{®} 2010L) | 3,6 | 6 |
| Charge conductrice : Graphite expansé | 0,6 | 1 |
| Polymère sacrificiel : Polyol 212-10 | 26,1 | 0 |
| Polymère sacrificiel : QPAC 40 | 14,0 | 0 |
| Matière active : Graphite | 55,7 | 93 |

| **Exemple selon l'invention** | **I'1** | |
|---|---|---|
| | Avant extraction | Après extraction |
| Liant : HNBR (Zetpol^{®} 0020) | 1,8 | 3 |
| Charge conductrice : Graphite expansé | 1,8 | 3 |
| Polymère sacrificiel : Polyol 212-10 | 25,6 | 0 |
| Polymère sacrificiel : QPAC 40 | 13,8 | 0 |
| Matière active : Graphite | 57,0 | 94 |

| **Exemple témoin** | **C'2** | |
|---|---|---|
| | Avant extraction | Après extraction |
| Liant : HNBR (Zetpol^{®} 2010L) | 1,8 | 3 |
| Charge conductrice : Graphite expansé | 1,8 | 3 |
| Polymère sacrificiel : Polyol 212-10 | 25,6 | 0 |
| Polymère sacrificiel : QPAC 40 | 13,8 | 0 |
| Matière active : Graphite | 57,0 | 94 |

| **Exemple selon l'invention** | **I'2** | |
|---|---|---|
| | Avant extraction | Après extraction |
| Liant : HNBR (Zetpol^{®} 0020) | 2,05 | 3 |
| Charge conductrice : Graphite expansé | 2,05 | 3 |
| Polymère sacrificiel : Polyol 212-10 | 20,80 | 0 |
| Polymère sacrificiel : QPAC 40 | 11,20 | 0 |
| Matière active : Graphite | 63,90 | 94 |

| **Exemple témoin** | **C'3** | |
|---|---|---|
| | Avant extraction | Après extraction |
| Liant : HNBR (Zetpol^{®} 2010L) | 2,25 | 3 |
| Charge conductrice : Graphite expansé | 2,25 | 3 |
| Polymère sacrificiel : Polyol 212-10 | 16,30 | 0 |
| Polymère sacrificiel : QPAC 40 | 8,80 | 0 |
| Matière active : Graphite | 70,40 | 94 |

On notera que l'ensemble des anodes C'1, C'2, C'3 et I'1, I'2 obtenues ont été réticulées exclusivement par une oxydation thermique selon l'invention, mais que seules I'1 et I'2 comprennent un liant selon l'invention.

### Protocole de caractérisation électrochimique des anodes C1-C9 et 11, 12 préparées par voie liquide et des anodes C'1-C'3 et I'1, I'2 préparées par voie fondue:

On a découpé à l'emporte-pièce les anodes C1-C9, I1, I2 et C'1-C'3, I'1, I'2 (diamètre 16 mm, surface 2,01 cm²) et on les a pesées. On a déterminé la masse de matière active en soustrayant la masse du collecteur de courant nu préparé selon les mêmes conditions (traitements thermiques). On les a mises dans un four directement relié à une boîte à gants. On les a séchées à 100° C sous vide pendant 12 heures, puis on les a transférées dans la boîte à gants (atmosphère d'argon : 0,1 ppm H₂O et 0,1 ppm O₂).

On a ensuite assemblé les piles boutons (format CR1620) en utilisant une contre-électrode de lithium métallique, un séparateur Cellgard 2500 et un électrolyte de grade batterie LiPF6 EC/DMC (50/50 en ratio massique). On a caractérisé les piles sur un potentiostat Biologic VMP3, en réalisant des cycles de charge/décharge à courant constant entre 1 V et 10 mV. Le régime était de C/5 en considérant la masse de matière active et une capacité théorique de 372 mAh/g. Afin de comparer les performances des différents systèmes, l'on a évalué les capacités (exprimées en mAh/g d'anode) lors de la première décharge pour la désinsertion de lithium (capacité initiale après le premier cycle), à la cinquième décharge (capacité à cinq cycles) et à la dixième décharge (capacité à dix cycles). On a en outre calculé le taux de rétention R (%) pour le rapport de la capacité à dix cycles sur la capacité au premier cycle.

Le tableau 3 ci-après donne les résultats de cette caractérisation.

**Tableau 3 :**

| anodes | Capacité initiale (mAh/g) | Capacité à 5 cycles (mAh/g) | Capacité à 10 cycles (mAh/g) - R (%) |
|---|---|---|---|
| C1 (réticulée par oxydation thermique via recuit) | 100 | 80 | 60 - 60 % |
| C2 (réticulée par oxydation thermique via recuit) | 240 | 150 | 150 - 62 % |
| C3 (non réticulée) | 100 | 85 | 85 - 85 % |
| **I1 (réticulée par oxydation thermique via recuit)** | **250** | **230** | **225 - 90 %** |
| C4 (réticulée par voie radicalaire et par oxydation thermique via recuit) | 210 | 160 | 150 - 71 % |
| C5 (réticulée par oxydation thermique via recuit) | 220 | 140 | 140 - 64 % |
| C6 (non réticulée) | 180 | 90 | 60 - 33 % |
| C7 (non réticulée) | 170 | 130 | 90 - 53 % |
| C8 (réticulée par voie radicalaire) | 150 | 125 | 105 - 70 % |
| C9 (réticulée par voie radicalaire) | 110 | 100 | 100 - 91 % |
| **I2 (réticulée par voie radicalaire et par oxydation thermique via recuit)** | **240** | **250** | **250** - **104 %** |
| C'1 (réticulée par oxydation thermique) | 120 | 100 | 95 - 79 % |
| **I'1 (réticulée par oxydation thermique)** | **200** | **210** | **210 - 105 %** |
| C'2 (réticulée par oxydation thermique) | 110 | 120 | |
| **I'2 (réticulée par oxydation thermique)** | **220** | **240** | **240 - 109 %** |
| C'3 (réticulée par oxydation thermique) | N'adhère pas au collecteur | | |

Le tableau 3 montre que les anodes I1 et I2 préparées par voie liquide selon le premier mode de réalisation de l'invention, i.e. dont le liant est un HNBR à taux d'ACN d'au moins 40 % et qui a été réticulée par une oxydation thermique sous air à 240° C, présentent chacune une capacité nettement supérieure à 200 mAh/g d'anode même après cinq et dix cycles (capacité même supérieure à 220 mAh/g), ainsi qu'une cyclabilité proche de 100 % entre les premier et dixième cycles. Ces résultats satisfaisants pour les anodes I1 et I2 contrastent avec ceux insuffisants obtenus pour les anodes C1 à C9 et démontrent l'effet de synergie entre le taux élevé d'ACN selon l'invention dans les NBR et/ou HNBR testés et la réticulation par oxydation thermique, notamment par comparaison avec :
- les anodes C1, C2, C4, C5 également réticulées par oxydation thermique mais pas avec ce taux élevé d'ACN dans le HNBR,
- les anodes C3 et C7 non conformes à l'invention (capacité inférieure ou égale à 130 mAh/g du cinquième au dixième cycle) comprenant un liant HNBR ou NBR à taux élevé d'ACN mais non réticulé, et
- les anodes C8 et C9 comprenant un liant NBR à taux élevé d'ACN mais exclusivement réticulée par voie radicalaire.

De plus, l'anode I2 selon l'invention montre un effet de synergie supplémentaire procuré par le mélange de liants NBR + HNBR tous deux à taux élevé d'ACN et réticulés par oxydation thermique en comparaison de l'anode I1 comprenant uniquement un HNBR comme liant (voir capacités et cyclabilité supérieures).

On notera que les anodes de l'invention peuvent comprendre en variante à titre de liant :
- un NBR à taux élevé d'ACN réticulé exclusivement par oxydation thermique et optionnellement en outre par voie radicalaire, et
- la combinaison d'un NBR et d'un HNBR, chacun à taux élevé d'ACN et tous deux réticulés exclusivement par oxydation thermique (le système de réticulation au peroxyde inclus dans la composition d'anode I2 étant facultatif).

Pour illustrer l'effet de ce recuit final à 240° C et sous air sur les performances capacitives des anodes I1 et I2 selon l'invention préparées par voie liquide, on a réalisé des mesures d'absorbance par spectroscopie infrarouge à transformée de Fourier (IRTF en abrégé, « FTIR » en anglais pour « Fourier transform infrared spectroscopy ») en fonction du nombre d'onde.

A cet effet, on a déposé un film constitué du liant HNBR selon l'invention (Zetpol^{®} 0020) de 100 µm d'épaisseur sur du cuivre, et on l'a traité 30 minutes à 240° C sous air. On a ensuite étudié ce film par IRTF en mode « ATR » (pour « attenuated total reflectance » en anglais, i.e. réflectance totale atténuée). La figure unique montre les deux spectres obtenus S1 et S2, respectivement avant et après ce recuit.

Le spectre S2 après ce recuit montre :
- une légère diminution de la bande à 2240 cm⁻¹, caractéristique des groupements nitriles -C ≡ N,
- une apparition d'une bande autour de 1600 cm⁻¹ attribuée à l'apparition de liaisons C=C et C=N, et
- une apparition d'une bande autour de 1740 cm⁻¹ attribuée à l'apparition de groupements C=O.

Ces bandes sont caractéristiques de l'oxydation partielle des groupements nitriles et de la réticulation du HNBR par oxydation/déshydratation de ces groupements nitriles (qui sont nettement plus nombreux que les insaturations issues du butadiène en raison du taux élevé d'ACN dans le HNBR).

Le tableau 3 montre également que les anodes I'1 et I'2 préparées par voie fondue selon le second mode de l'invention, i.e. dont le liant est un HNBR à taux d'ACN d'au moins 40 % qui a été réticulé par oxydation thermique lors de la décomposition de la phase polymérique sacrificielle, présente une capacité égale ou supérieure à 200 mAh/g d'anode même après cinq et dix cycles (capacité d'au moins 210 mAh/g), ainsi qu'une cyclabilité supérieure à 100 % entre les premier et dixième cycles. Ces résultats satisfaisants pour les anodes I'1 et I'2 contrastent avec l'impossibilité de faire adhérer le film élastomère au collecteur pour l'anode C'3 (pour laquelle on a notamment utilisé une fraction massique de phase sacrificielle avant extraction de 25,1 % seulement, très en deçà des 39,4 % et 32 % respectivement utilisés pour les anodes I'1 et I'2).

## Revendications

1. Composition polymérique pour électrode apte à former une anode de batterie lithium-ion, la composition comprenant une matière active qui comprend un graphite apte à réaliser une insertion/ désinsertion réversible de lithium en ladite anode, une charge électriquement conductrice et un liant élastomère réticulé, **caractérisée en ce que** ledit liant réticulé comprend au moins un copolymère acrylonitrile-butadiène non hydrogéné (NBR) et/ou au moins un copolymère acrylonitrile-butadiène hydrogéné (HNBR) qui présente(nt) chacun un taux massique d'unités issues de l'acrylonitrile égal ou supérieur à 40 % et qui est(sont) réticulé(s) par oxydation thermique.

2. Composition selon la revendication 1, **caractérisée en ce que** ledit liant réticulé comprend le produit d'une réaction chimique d'oxydation thermique, sous une atmosphère comprenant de l'oxygène selon une pression partielle d'oxygène supérieure à 10⁴ Pa et à une température comprise entre 200° C et 300° C, dudit au moins un NBR et/ou dudit au moins un HNBR à l'état non réticulé(s), de ladite matière active et de ladite charge électriquement conductrice avec l'oxygène de ladite atmosphère.

3. Composition selon la revendication 1 ou 2, **caractérisée en ce que** lesdites unités issues de l'acrylonitrile que comporte(nt) ledit au moins un NBR et/ou ledit au moins HNBR réticulé(s) sont au moins partiellement enrichies en atomes d'oxygène et appauvries en atomes d'hydrogène par ladite oxydation thermique.

4. Composition selon une des revendications précédentes, **caractérisée en ce que** la composition est dépourvue de tout système de réticulation dudit au moins un NBR et/ou dudit au moins un HNBR réticulé(s), tel qu'un système de réticulation radicalaire par exemple au peroxyde.

5. Composition selon une des revendications précédentes, **caractérisée en ce que** ledit liant réticulé comprend selon une fraction massique inclusivement comprise entre 70 % et 100 % ledit au moins un NBR et/ou ledit au moins un HNBR, ledit liant réticulé étant présent dans la composition selon une fraction massique inférieure à 5 %, de préférence inférieure ou égale à 4 %.

6. Composition selon une des revendications précédentes, **caractérisée en ce que** ledit liant réticulé comprend au moins un HNBR qui présente une valeur d'iode, mesurée selon la norme ASTM D5902-05, supérieure à 10 % et avantageusement supérieure à 15 %.

7. Composition selon une des revendications précédentes, **caractérisée en ce que** ledit liant réticulé comprend un mélange dudit au moins un NBR et dudit au moins un HNBR.

8. Composition selon une des revendications précédentes, **caractérisée en ce que** ledit taux massique d'unités issues de l'acrylonitrile est égal ou supérieur à 44 %, de préférence égal ou supérieur à 48 %.

9. Composition selon une des revendications précédentes, **caractérisée en ce que** la composition comprend :
- selon une fraction massique supérieure à 90 %, ladite matière active comprenant ledit graphite qui est de type artificiel, et
- selon une fraction massique comprise entre 1 % et 6 %, ladite charge électriquement conductrice qui est choisie dans le groupe constitué par les noirs de carbone, les graphites, les graphites expansés, les fibres de carbones, les nanotubes de carbone, les graphènes et leurs mélanges.

10. Electrode apte à former une anode de batterie lithium-ion, **caractérisée en ce que** l'électrode comprend au moins un film constitué d'une composition selon une des revendications précédentes, et un collecteur métallique de courant en contact avec ledit au moins un film.

11. Batterie lithium-ion comprenant au moins une cellule comportant une anode, une cathode et un électrolyte à base d'un sel de lithium et d'un solvant non aqueux, **caractérisée en ce que** ladite anode est constituée d'une électrode selon la revendication 10.

12. Procédé de préparation d'une composition selon une des revendications 1 à 9, **caractérisé en ce que** le procédé comprend successivement :
a) un mélangeage d'ingrédients de la composition comprenant ladite matière active, ledit liant élastomère à l'état non réticulé et ladite charge électriquement conductrice, pour l'obtention d'un mélange précurseur de ladite composition,
b) un dépôt dudit mélange sur un collecteur métallique de courant pour que ledit mélange forme un film non réticulé, puis
c) une oxydation thermique dudit film non réticulé sous une atmosphère comprenant de l'oxygène selon une pression partielle d'oxygène supérieure à 10⁴ Pa et à une température comprise entre 200° C et 300° C, pour obtenir ladite électrode dans laquelle ledit liant est réticulé.

13. Procédé selon la revendication 12, **caractérisé en ce que** l'on met en œuvre :
- l'étape a) par broyage par voie liquide desdits ingrédients dissous ou dispersés dans un solvant, et
- l'étape c), après évaporation dudit solvant consécutive à l'étape b), par un recuit dudit film.

14. Procédé selon la revendication 12, **caractérisé en ce que** l'on met en œuvre :
- l'étape a) par mélangeage desdits ingrédients par voie fondue et sans évaporation de solvant, lesdits ingrédients comprenant en outre une phase polymérique sacrificielle selon une fraction massique dans ledit mélange égale ou supérieure à 28 %, et
- l'étape c) par décomposition thermique de ladite phase polymérique sacrificielle présentant une température de décomposition thermique inférieure d'au moins 20° C à celle dudit liant, pour éliminer au moins partiellement ladite phase polymérique sacrificielle.

15. Procédé selon la revendication 14, **caractérisé en ce que** ladite phase polymérique sacrificielle comprend au moins un polymère sacrificiel choisi parmi les polyalcènes carbonates et est présente dans ledit mélange selon une fraction massique comprise entre 30 % et 50 %, et **en ce que** l'étape a) est mise en œuvre dans un mélangeur interne ou une extrudeuse sans macroséparation de phases entre ledit liant et ladite phase polymérique sacrificielle dans ledit mélange, dans lequel ledit liant est dispersé de manière homogène dans ladite phase polymérique sacrificielle qui est continue ou bien forme une phase co-continue avec cette dernière.

## Patentansprüche

1. Polymere Elektrodenzusammensetzung, die dazu geeignet ist, eine Anode für eine Lithium-Ionen-Batterie zu bilden, wobei die Zusammensetzung ein aktives Material umfasst, das einen Graphit umfasst, der dazu geeignet ist, eine reversible Insertion/Desinsertion von Lithium in die Anode zu bewirken, einen elektrisch leitenden Füllstoff und ein vernetztes elastomeres Bindemittel, **dadurch gekennzeichnet, dass** das vernetzte Bindemittel wenigstens ein nicht wasserstoffhaltiges Acrylnitril-Butadien-Copolymer (NBR) und/oder wenigstens ein wasserstoffhaltiges Acrylnitril-Butadien-Copolymer (HNBR) umfasst, die jeweils einen Massenanteil an Acrylnitril-Einheiten von 40 % oder mehr aufweisen und durch thermische Oxidation vernetzt werden.

2. Zusammensetzung nach Anspruch 1, **dadurch gekennzeichnet, dass** das vernetzte Bindemittel das Produkt einer chemischen Reaktion der thermischen Oxidation des wenigstens einen NBR und/oder des wenigstens einen HNBR im unvernetzten Zustand, des aktiven Materials und des elektrisch leitfähigen Füllstoffs mit dem Sauerstoff der Atmosphäre, in einer Sauerstoff enthaltenden Atmosphäre, bei einem Sauerstoffpartialdruck von mehr als 10⁴ Pa und einer Temperatur zwischen 200° C und 300° C umfasst.

3. Zusammensetzung nach Anspruch 1 oder 2, **dadurch gekennzeichnet, dass** die Acrylnitril-Einheiten, die das wenigstens eine vernetzte NBR und/oder das wenigstens eine vernetzte HNBR enthalten, durch die thermische Oxidation wenigstens teilweise mit Sauerstoffatomen angereichert und an Wasserstoffatomen verarmt sind.

4. Zusammensetzung nach einem der vorhergehenden Ansprüche, **dadurch gekennzeichnet, dass** die Zusammensetzung frei von jeglichem Vernetzungssystem des wenigstens einen vernetzten NBR und/oder des wenigstens einen vernetzten HNBR ist, wie z.B. ein radikalisches Vernetzungssystem, z.B. mit Peroxid.

5. Zusammensetzung nach einem der vorhergehenden Ansprüche, **dadurch gekennzeichnet, dass** das vernetzte Bindemittel in einem Massenanteil von einschließlich 70 % bis 100 % das wenigstens eine NBR und/oder das wenigstens eine HNBR enthält, wobei das vernetzte Bindemittel in der Zusammensetzung in einem Massenanteil von weniger als 5 %, bevorzugt von weniger als oder gleich 4 %, vorhanden ist.

6. Zusammensetzung nach einem der vorhergehenden Ansprüche, **dadurch gekennzeichnet, dass** das vernetzte Bindemittel wenigstens ein HNBR umfasst, das einen nach ASTM D5902-05 gemessenen Jodwert, von mehr als 10 % und bevorzugt mehr als 15 % aufweist.

7. Zusammensetzung nach einem der vorhergehenden Ansprüche, **dadurch gekennzeichnet, dass** das vernetzte Bindemittel eine Mischung aus dem wenigstens einen NBR und dem wenigstens einen HNBR umfasst.

8. Zusammensetzung nach einem der vorhergehenden Ansprüche, **dadurch gekennzeichnet, dass** der Massenanteil an Acrylnitril-Einheiten 44 % oder mehr, bevorzugt 48 % oder mehr beträgt.

9. Zusammensetzung nach einem der vorhergehenden Ansprüche, **dadurch gekennzeichnet, dass** die Zusammensetzung umfasst:
- nach einem Massenanteil von mehr als 90 %, wobei das aktive Material Graphit umfasst, der vom künstlichen Typ ist, und
- nach einem Massenanteil zwischen 1 % und 6 % den elektrisch leitfähigen Füllstoff, der aus der Gruppe gewählt ist, umfassend Ruß, Graphite, expandierte Graphite, Kohlenstofffasern, Kohlenstoffnanoröhren, Graphene und deren Mischungen.

10. Elektrode, welche dazu geeignet ist, eine Anode einer Lithium-Ionen-Batterie zu bilden, **dadurch gekennzeichnet, dass** die Elektrode wenigstens einen Film aus einer Zusammensetzung nach einem der vorhergehenden Ansprüche und einen metallischen Stromabnehmer in Kontakt mit dem wenigstens einen Film umfasst.

11. Lithium-Ionen-Batterie, umfassend wenigstens eine Zelle mit einer Anode, einer Kathode und einem Elektrolyten auf der Basis eines Lithiumsalzes und eines nichtwässrigen Lösungsmittels, **dadurch gekennzeichnet, dass** die Anode aus einer Elektrode nach Anspruch 10 besteht.

12. Verfahren zur Herstellung einer Zusammensetzung nach einem der Ansprüche 1 bis 9, **dadurch gekennzeichnet, dass** das Verfahren nacheinander umfasst:
a) Mischen von Bestandteilen der Zusammensetzung, die das aktive Material, das elastomere Bindemittel in nicht vernetztem Zustand und den elektrisch leitfähigen Füllstoff umfassen, um eine Vorläufermischung der Zusammensetzung zu erhalten,
b) Aufbringen der Mischung auf einen metallischen Stromabnehmer, damit die Mischung einen nicht vernetzten Film bildet, und dann
c) thermische Oxidation des ungehärteten Films in einer Sauerstoff enthaltenden Atmosphäre bei einem Sauerstoffpartialdruck von mehr als 10⁴ Pa und einer Temperatur zwischen 200° C und 300° C, um die Elektrode zu erhalten, in der das Bindemittel gehärtet ist.

13. Verfahren nach Anspruch 12, **dadurch gekennzeichnet, dass** ausgeführt wird:
- Schritt a) durch Flüssigmahlen der in einem Lösungsmittel gelösten oder dispergierten Inhaltsstoffe, und
- Schritt c) nach dem Verdampfen des in Schritt b) erzeugten Lösungsmittels durch Glühen der Folie.

14. Verfahren nach Anspruch 12, **dadurch gekennzeichnet, dass** ausgeführt wird:
- Schritt a) durch Mischen der Zutaten in der Schmelze und ohne Verdampfen des Lösungsmittels, wobei die Zutaten außerdem eine polymere Opferphase in einem Massenanteil von 28 % oder mehr in der Mischung enthalten, und
- Schritt c) durch thermische Zersetzung der Opferpolymerphase mit einer thermischen Zersetzungstemperatur, die wenigstens 20 °C unter der des Bindemittels liegt, um die Opferpolymerphase wenigstens teilweise zu entfernen.

15. Verfahren nach Anspruch 14, **dadurch gekennzeichnet, dass** die polymere Opferphase wenigstens ein Opferpolymer umfasst, gewählt aus den Polyalkencarbonaten, das in der Mischung in einem Massenanteil zwischen 30 % und 50 % vorliegt, und dass Schritt a) in einem Innenmischer oder Extruder ohne Makroseparation der Phasen zwischen dem Bindemittel und der Opferpolymerphase in der Mischung durchgeführt wird, wobei das Bindemittel homogen in der Opferpolymerphase dispergiert ist, die entweder kontinuierlich ist oder mit dieser eine co-kontinuierliche Phase bildet.

## Claims

1. Polymeric composition for an electrode capable of forming a lithium-ion battery anode, the composition comprising an active material which comprises a graphite capable of carrying out a reversible insertion/deinsertion of lithium in the said anode, an electrically conductive filler and a crosslinked elastomeric binder, **characterized in that** the said crosslinked binder comprises at least one nonhydrogenated acrylonitrile/butadiene copolymer (NBR) and/or at least one hydrogenated acrylonitrile/butadiene copolymer (HNBR) which each exhibit(s) a content by weight of units resulting from acrylonitrile equal to or greater than 40% and which is (are) crosslinked by thermal oxidation.

2. Composition according to Claim 1, **characterized in that** the said crosslinked binder comprises the product of a thermal oxidation chemical reaction, under an atmosphere comprising oxygen according to an oxygen partial pressure of greater than 10⁴ Pa and at a temperature of between 200°C and 300°C, of the said at least one NBR and/or of the said at least one HNBR in the noncrosslinked state, of the said active material and of the said electrically conductive filler with oxygen of the said atmosphere.

3. Composition according to Claim 1 or 2, **characterized in that** the said units resulting from acrylonitrile which the said at least one crosslinked NBR and/or the said at least one crosslinked HNBR comprise(s) are at least partially enriched in oxygen atoms and depleted in hydrogen atoms by the said thermal oxidation.

4. Composition according to one of the preceding claims, **characterized in that** the composition is devoid of any system for crosslinking the said at least one NBR and/or the said at least one HNBR crosslinked, such as a radical crosslinking system, for example a peroxide crosslinking system.

5. Composition according to one of the preceding claims, **characterized in that** the said crosslinked binder comprises the said at least one NBR and/or the said at least one HNBR according to a fraction by weight inclusively of between 70% and 100%, the said crosslinked binder being present in the composition according to a fraction by weight of less than 5%, preferably of less than or equal to 4%.

6. Composition according to one of the preceding claims, **characterized in that** the said crosslinked binder comprises at least one HNBR which exhibits an iodine value, measured according to Standard ASTM D5902-05, of greater than 10% and advantageously of greater than 15%.

7. Composition according to one of the preceding claims, **characterized in that** the said crosslinked binder comprises a mixture of the said at least one NBR and of the said at least one HNBR.

8. Composition according to one of the preceding claims, **characterized in that** the said content by weight of units resulting from acrylonitrile is equal to or greater than 44%, preferably equal to or greater than 48%.

9. Composition according to one of the preceding claims, **characterized in that** the composition comprises:
- according to a fraction by weight of greater than 90%, the said active material comprising the said graphite which is of artificial type, and
- according to a fraction by weight of between 1% and 6%, the said electrically conductive filler which is chosen from the group consisting of carbon blacks, graphites, expanded graphites, carbon fibres, carbon nanotubes, graphenes and their mixtures.

10. Electrode capable of forming a lithium-ion battery anode, **characterized in that** the electrode comprises at least one film consisting of a composition according to one of the preceding claims and a metal current collector in contact with the said at least one film.

11. Lithium-ion battery comprising at least one cell comprising an anode, a cathode and an electrolyte based on a lithium salt and on a nonaqueous solvent, **characterized in that** the said anode consists of an electrode according to Claim 10.

12. Process for the preparation of a composition according to one of Claims 1 to 9, **characterized in that** the process successively comprises:
a) a compounding of ingredients of the composition comprising the said active material, the said elastomeric binder in the noncrosslinked state and the said electrically conductive filler, in order to obtain a precursor mixture of the said composition,
b) a deposition of the said mixture on a metal current collector, in order for the said mixture to form a noncrosslinked film, then
c) a thermal oxidation of the said noncrosslinked film under an atmosphere comprising oxygen according to an oxygen partial pressure of greater than 10⁴ Pa and at a temperature of between 200°C and 300°C, in order to obtain the said electrode in which the said binder is crosslinked.

13. Process according to Claim 12, **characterized in that**:
- stage a) is carried out by liquid grinding of the said ingredients dissolved or dispersed in a solvent, and
- stage c), after evaporation of the said solvent subsequent to stage b), is carried out by an annealing of the said film.

14. Process according to Claim 12, **characterized in that**:
- stage a) is carried out by melt compounding of the said ingredients without evaporation of solvent, the said ingredients additionally comprising a sacrificial polymeric phase according to a fraction by weight in the said mixture equal to or greater than 28%, and
- stage c) is carried out by thermal decomposition of the said sacrificial polymeric phase exhibiting a thermal decomposition temperature lower by at least 20°C than that of the said binder, in order to at least partially remove the said sacrificial polymeric phase.

15. Process according to Claim 14, **characterized in that** the said sacrificial polymeric phase comprises at least one sacrificial polymer chosen from polyalkene carbonates and is present in the said mixture according to a fraction by weight of between 30% and 50%, and **in that** stage a) is carried out in an internal mixer or an extruder without macroseparation of phases between the said binder and the said sacrificial polymeric phase in the said mixture, in which the said binder is homogeneously dispersed in the said sacrificial polymeric phase which is continuous or else forms a phase cocontinuous with the sacrificial polymeric phase.
